# EUROPÄISCHE PATENTANMELDUNG

(11) **EP 1 359 054 A2**
(43) Veröffentlichungstag der Anmeldung: **05.11.2003**
(21) Anmeldenummer: 03008303.4
(22) Anmeldetag: 10.04.2003
(51) Int. Cl.: B60R 5/04

(54) **Laderaumabdeckung mit einer Durchgriffsöffnung**

(30) Priorität: 23.04.2002 DE 10218838
(71) Anmelder: BOS GmbH & Co. KG, 73760 Ostfildern (DE)
(72) Erfinder: Schlecht, Werner P., 71665 Vaihingen/Enz (DE)
(74) Vertreter: Patentanwälte , Ruff, Wilhelm, Beier, Dauster & Partner

(57) **Zusammenfassung**

2.1 Ein Flächengebilde mit einer Durchgriffsöffnung, die durch ein bewegliches Abdeckelement zumindests teilweise verschließbar ist, ist bekannt.
2.2. Erfindungsgemäß weist das Abdeckelement eine kleinere Grundfläche auf als eine freie Durchgriffsfläche der Durchgriffsöffnung und das Abdeckelement ist als frei durch die Durchgriffsöffnung hindurch schwenkbare, zu beiden Seiten der Durchgriffsöffnung hin auslenkbare Abdeckklappe gestaltet.
2.3. Einsatz für Laderaumabdeckungen von Kraftfahrzeugen.

## Beschreibung

Die Erfindung betrifft ein Flächengebilde, insbesondere eine Laderaumabdeckung für ein Kraftfahrzeug, mit einer Durchgriffsöffnung, die durch ein bewegliches Abdeckelement zumindest teilweise verschließbar ist.

Ein derartiges Flächengebilde ist in Form einer Laderaumabdeckung für Personenkraftwagen aus der DE 197 07 676 C1 bekannt. Eine horizontal ausziehbare Laderaumabdeckung weist an ihrem ausziehseitigen Stirnbereich ein Flächengebilde in Form eines formsteifen Konturteiles auf. In dem Konturteil ist eine Durchgriffsöffnung vorgesehen, um die Laderaumabdeckung aus der aufgerollten Ruheposition in die ausgezogene Funktionsposition manuell zu überführen, oder um die Laderaumabdeckung aus der Funktionsposition auszuhängen und in die eingezogene, aufgerollte Ruheposition zurückzuführen. Um zu verhindern, daß von außerhalb des Kraftfahrzeugs her bei ausgezogener, in Funktionsposition befindlicher Laderaumabdeckung ein Blick durch die Durchgriffsöffnung hindurch in den unterhalb der Laderaumabdeckung befindlichen Laderaumbereich ermöglicht ist, ist die Durchgriffsöffnung mit einem schwenkbeweglichen Abdeckelement versehen, das von einer Unterseite des Konturteiles durch Federkraft gegen die Unterseite eines Randes der Durchgriffsöffnung gedrückt gehalten wird. Der Rand der Durchgriffsöffnung bildet einen Anschlag für das Abdeckelement. Zum Eingreifen in die Durchgriffsöffnung wird das Abdeckelement beim Hindurchgreifen der entsprechenden Finger der Hand zwangsläufig nach unten weggedrückt, wodurch das Konturteil im Bereich der Durchgriffsöffnung ergriffen und in die gewünschte Richtung bewegt werden kann.

Aufgabe der Erfindung ist es, ein Flächengebilde der eingangs genannten Art zu schaffen, das mit einfachen Mitteln einen Sichtschutz für die Durchgriffsöffnung ermöglicht.

Diese Aufgabe wird erfindungsgemäß dadurch gelöst, dass das Abdeckelement eine kleinere Grundfläche aufweist als eine freie Durchgriffsfläche der Durchgriffsöffnung und dass das Abdeckelement als frei durch die Durchgriffsöffnung hindurchschwenkbare, zu beiden Seiten der Durchgriffsöffnung hin auslenkbare Abdeckklappe gestaltet ist. Die erfindungsgemäße Lösung weist einige wesentliche Vorteile gegenüber dem zuvor abgehandelten Stand der Technik auf. Dadurch, dass die Abdeckklappe eine kleinere Grundfläche aufweist als die freie Durchgriffsfläche der Durchgriffsöffnung, kann die Abdeckklappe frei durch die Durchgriffsöffnung hindurchschwenken, ohne die Ränder der Durchgriffsöffnung zu berühren. Vorzugweise verbleibt zwischen den Rändern der Abdeckklappe und den Rändern der Durchgriffsöffnung ein ausreichend großer Spalt, um Herstellungstoleranzen in der Größe der Abdeckklappe oder der Durchgriffsöffnung ausgleichen zu können, ohne dass beim Hindurchschwingen eine Berührung zwischen Abdeckklappe und Rand der Durchgriffsöffnung erfolgt. Die Abdeckklappe weist vom Grundsatz her die Funktion einer hindurchschwingenden Tür bei Gebäuden auf. Dadurch, dass erfindungsgemäß im Vergleich zum Stand der Technik kein Anschlag vorgesehen ist, kann auch kein entsprechender Verschleiß auftreten. Zudem werden lästige Anschlaggeräusche vermieden. Ein weiterer wesentlicher Vorteil der erfindungsgemäßen Lösung ist es, dass die Abdeckklappe richtungsunabhängig eingebaut werden kann. Falls daher die Abdeckklappe als Teil einer Vormontageeinheit vorgesehen ist, die auch die Umrahmung der Durchgriffsöffnung mit einschließt, so kann diese Vormontageeinheit einschließlich Umrahmung und integrierter Abdeckklappe in zwei um 180° verdrehten Positionen eingebaut werden. Beim Stand der Technik hingegen ist lediglich eine einzelne, funktionsgerechte Einbauposition möglich.

In Ausgestaltung der Erfindung sind der Abdeckklappe Rückstellmittel zugeordnet, die die Abdeckklappe unbetätigt in einem etwa in der Ebene der Durchgriffsöffnung befindlichen, Nulllagenbereich ausrichten. Hierdurch ist gewährleistet, dass die Abdeckklappe bei Wegnahme der manuellen Belastung selbsttätig in eine die Durchgriffsöffnung zumindest soweit verdeckende Stellung zurückbewegt wird, dass der notwendige Sichtschutz für den hinter der Durchgriffsöffnung befindlichen Raum gegeben ist. Falls das Flächengebilde als Laderaumabdeckung für ein Kraftfahrzeug ausgebildet ist, so wird dieser Raum durch den unterhalb der Laderaumabdeckung befindlichen Laderaumbereich definiert. Die Rückstellmittel können so ausgebildet sein, dass eine Rückstellung der Abdeckklappe aus beiden Auslenkrichtungen immer in eine definierte, mittige Nullposition erfolgt. Sie können auch so ausgebildet sein, dass eine Rückstellung nicht immer in dieselbe Position, sondern in unterschiedliche Positionen erfolgt, die alle innerhalb des Nulllagenbereiches liegen. Der Nulllagenbereich ist dadurch definiert, dass die Abdeckklappe die Durchgriffsöffnung zumindest soweit verdecken muß, dass ein Blick durch die Durchgriffsöffnung hindurch zumindest weitgehend verhindert ist. Gewisse Schrägstellungen der Abdeckklappe in kleineren Winkelbereichen, in denen die Abdeckklappe vorzugsweise noch nicht über die Oberfläche der entsprechenden Umrahmung hinausreicht, sind somit noch von dieser Definition gedeckt. Das Flächengebilde kann auch an anderen Bauteilen aus dem Kfz-Bereich vorgesehen sein. Vorzugsweise ist das Flächengebilde zumeist abschnittsweise formstabil. Die Rückstellmittel sind gemäß einer Ausgestaltung so ausgeführt, dass eine Rückstellung der Abdeckklappe lediglich aus einer Auslenkrichtung in den Nulllagenbereich erfolgt. Diese Ausgestaltung ist vorteilhaft bei Laderaumabdeckungen einsetzbar, bei denen in der Regel ein Durchgriff durch die Durchgriffsöffnung lediglich von oben her erfolgt, so dass es ausreicht, wenn die Abdeckklappe aus der nach unten ausgelenkten Stellung wieder in die Nulllage zurückgestellt wird.

In weiterer Ausgestaltung der Erfindung sind Rückstellmittel für beide Schwenkrichtungen vorgesehen. Diese Ausgestaltung gewährleistet eine Rückstellung der Abdeckklappe in den Nulllagenbereich bei Auslenkungen in beiden Richtungen, so dass Durchgriffmöglichkeiten durch die Durchgriffsöffnung von beiden Seiten her bestehen und dennoch nach dem Herausziehen der Hand aus der Durchgriffsöffnung in jedem Fall aus der jeweils ausgelenkten Richtung die Ausrichtung in die Ruheposition erfolgt.

In weiterer Ausgestaltung der Erfindung sind als Rückstellmittel Federmittel vorgesehen, die alternativ oder kumulativ in beiden Schwenkrichtungen der Abdeckklappe - aus der Ruheposition heraus - Rückstellkräfte auf die Abdeckklappe in Richtung des Nulllagenbereiches ausüben. Dies ist eine besonders einfache und funktionssichere mechanische Lösung.

In weiterer Ausgestaltung der Erfindung greifen die Federmittel in einem Schwenkachsbereich der Abdeckklappe an. Da sich der Schwenkachsbereich der Abdeckklappe im Bereich der Umrahmung der Durchgriffsöffnung befindet, sind die Federmittel vorzugsweise zumindest weitgehend unsichtbar in dieser Umrahmung integriert.

In weiterer Ausgestaltung der Erfindung weisen die Federmittel Torsionsfedern auf. Diese Torsionsfedern besitzen Vorteile, da sie koaxial zu der Schwenkachse der Abdeckklappe positioniert sein können und somit lediglich geringen Bauraum benötigen.

In weiterer Ausgestaltung der Erfindung sind die Federmittel beider Schwenkrichtungen im Nulllagenbereich der Abdeckklappe vorgespannt, und die Federmittel sind derart ausgelegt, dass sie sich im Nulllagenbereich der Abdeckklappe gegeneinander aufheben. Die Abdeckklappe befindet sich somit im Nulllagenbereich im Gleichgewicht und wird durch die Federkräfte in dieser Position so lange gehalten, bis eine manuelle Belastung von einer Seite her auf die Abdeckklappe wirkt.

In weiterer Ausgestaltung der Erfindung sind der Abdeckklappe manuell betätigbare Stellmittel zur Vergrößerung des Öffnungswinkels der Abdeckklappe relativ zu der Durchgriffsöffnung bewegungsübertragend zugeordnet. Durch diese Ausgestaltung wird vorteilhaft vermieden, dass sich eine Bedienperson bei einer Bedienung der Laderaumabdeckung die Finger einklemmen kann. Denn durch Betätigung des wenigstens einen Stellmittels wird die Abdeckklappe zwangsgesteuert in eine weit geöffnete, vorzugsweise um 90° relativ zur Durchgriffsöffnung abstehende Auslenkposition überführt, in der die Abdeckklappe durch die entsprechenden Federrückstellkräfte nicht mehr an den Fingern der Bedienhand anliegt. Die entsprechende Bedienhand kann somit wieder aus der Durchgriffsöffnung entfernt werden, ohne dass Verletzungsgefahren durch die zurückdrückende Abdeckklappe auftreten. Vorzugsweise ist ein Bedienelement der Stellmittel im Bereich der Durchgriffsöffnung derart vorgesehen, dass das Bedienelement zwangsläufig betätigt wird, wenn eine Bedienhand in die Durchgriffsöffnung eingreift, um die Laderaumabdeckung zu ergreifen. Das Bedienelement ist vorzugsweise mit Hilfe von Übertragungsmitteln mit der Schwenklagerung der Abdeckklappe derart verbunden, dass bei einer Betätigung des Bedienelementes die entsprechende Bewegung des Bedienelementes in eine Schwenkbewegung der Abdeckklappe in Öffnungsrichtung umgesetzt wird. Vorzugsweise weisen die Stellmittel Zwangsführungsmittel auf, die im Bereich der Schwenkachse der Abdeckklappe positioniert sind. Die Stellmittel können auch bei einem Abdeckelement eingesetzt werden, das in seiner Ruhelage gemäß der DE 197 07 676 C1 gegen einen Anschlag gedrückt wird.

In weiterer Ausgestaltung der Erfindung weisen die Stellmittel Sperrmittel auf, die während einer Betätigung der Stellmittel die Abdeckklappe in der geöffneten Position blockiert halten. Dadurch wird ein äußerst funktionssicherer Einklemmschutz für eine in die Durchgriffsöffnung mit ihrer Hand eingreifende Bedienperson erreicht.

In weiterer Ausgestaltung der Erfindung sind der Abdeckklappe Dämpfungsmittel zugeordnet, die eine Rückstellbewegung der Abdeckklappe aus einer Auslenkposition in den Nulllagenbereich verzögern. Hierdurch werden Verletzungsgefahren noch zuverlässiger vermieden. Denn dadurch, dass die Abdeckklappe zeitverzögert in ihren Nulllagenbereich zurückbewegt wird, besteht für eine Bedienperson genügend Zeit, ihre Hand aus der Durchgriffsöffnung zu entfernen, bevor die Abdeckklappe in den Nulllagenbereich zurückbewegt ist. Auch diese Ausgestaltung ist grundsätzlich in gleicher Weise bei einem Abdeckelement einsetzbar, wie es aus der DE 197 07 676 C1 bekannt ist.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch eine Ausführungsform eines erfindungsgemäßen Flächengebildes in Form einer Laderaumabdeckung für ein Kraftfahrzeug,
- Fig. 2: in vergrößerter Darstellung einen Schnitt durch ein Konturteil der Laderaumabeckung nach Fig. 1, das mit einer durch eine Abdeckklappe verschließbaren Durchgriffsöffnung versehen ist,
- Fig. 3: in aufgeschnittener, perspektivischer Darstellung die Lagerung der Abdeckklappe gemäß Fig. 2,
- Fig. 4: eine Draufsicht auf die Durchgriffsöffnung in dem Konturteil nach Fig. 1,
- Fig. 5: eine perspektivische Explosionsdarstellung einer Baueinheit aus Umrahmung für die Durchgriffsöffnung, Abdeckklappe und Federmittel für die Abdeckklappe gemäß Fig. 3,
- Fig. 6: in vergrößerter Darstellung eine Seitenansicht der Abdeckklappe nach den Fig. 3 bis 5,
- Fig. 7: in perspektivischer Darstellung einen Ausschnitt einer weiteren Ausführungsform eines erfindungsgemäßen Flächengebildes mit einer durch Torsionsfedern belasteten Abdeckklappe,
- Fig. 8: eine perspektivische Explosionsdarstellung der Abdeckklappe einschließlich Lagerung und Umrahmung für die Ausführungsform nach Fig. 7,
- Fig. 9: eine Detailansicht der Lagerung der Abdeckklappe nach Fig. 8,
- Fig. 10: in perspektivischer Darstellung Lagerungselemente für die Abdeckklappe nach den Fig. 7 bis 9,
- Fig. 11: in einer Explosionsdarstellung eine weitere Ausführungsform einer Abdeckklappe einschließlich Lagerung und Umrahmung,
- Fig. 12 bis 14: die Abdeckklappe nach Fig. 11 in unterschiedlichen Winkelpositionen,
- Fig. 15: schematisch eine Schnittdarstellung ähnlich Fig. 2, wobei die Abdeckklappe einen Kantenschutz aufweist und

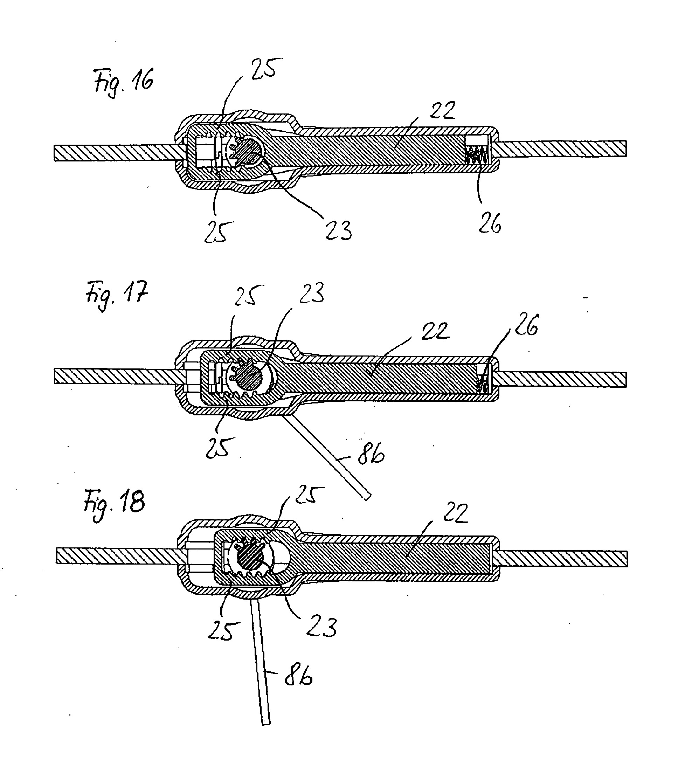

- Fig. 16 bis 18: in einer Schnittdarstellung die Ausführungsform nach den Fig. 12 bis 14 im Bereich der Stell- und Sperrmittel.

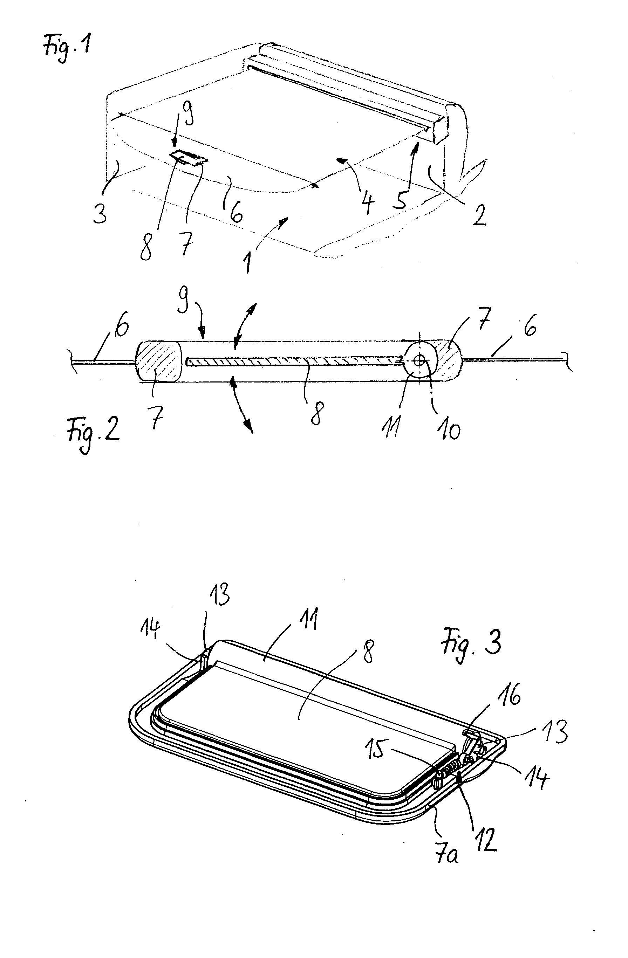

Ein Laderaum 1 für ein Kraftfahrzeug gemäß Fig. 1 ist in grundsätzlich bekannter Weise in Fahrzeuglängsrichtung nach vorne durch eine Rückseite einer Rückenlehnenanordnung 2 einer Fondsitzbank und zu beiden Seiten hin durch jeweils eine Seitenwand 3 begrenzt. In Fahrzeuglängsrichtung gesehen nach hinten ist der Laderaum 1 durch eine Hecktür oder eine Heckklappe begrenzt. Im Bereich der Rückseite der Rückenlehne der Fondsitzbank ist ein Kassettengehäuse 5 für ein flexibles Flächengebilde in Form einer Laderaumabdeckung 4 positioniert. Die Laderaumabdeckung 4 ist in ihrer eingezogenen Ruheposition auf einer Rollowelle in dem Kassettengehäuse 5 aufgewickelt. In der in Fig. 1 dargestellten, ausgezogenen Funktionsposition ist die Laderaumabdeckung 4 in laderaumseitigen Halterungen eingehängt. Hierzu ist an einem vorderen Stirnende der Laderaumabdeckung 4 ein formsteifes Konturteil 6 vorgesehen, das mit seitlich abragenden Einhängezapfen versehen ist, die in den laderaumseitigen Halterungen positionierbar sind.

Das formstabile Konturteil 6 weist als Teil der Laderaumabdeckung eine Durchgriffsöffnung 9 auf, die durch eine Umrahmung in Form eines Randgehäuses 7 begrenzt ist. Das Randgehäuse 7 ist fest mit dem Konturteil 6 verbunden. Das Konturteil 6 stellt einen Teil der Laderaumabdeckung und damit einen Teil des Flächengebildes im Sinne der Erfindung dar.

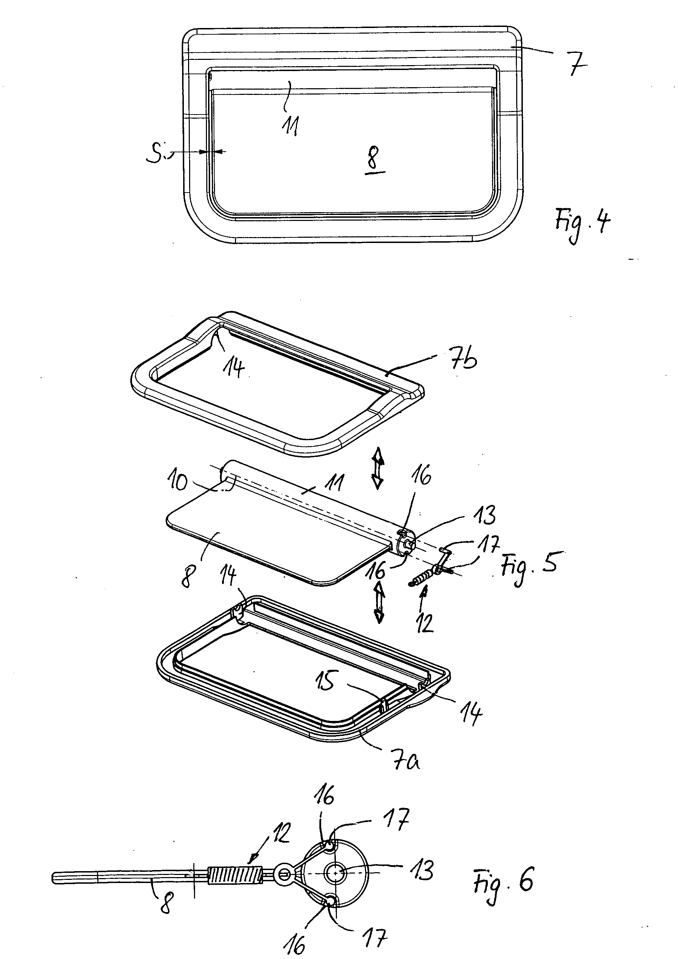

Die Durchgriffsöffnung 9 ist teilweise durch eine Abdeckklappe 8 verdeckt, die um eine Schwenkachse 10 in dem Randgehäuse 7 schwenkbeweglich gelagert ist. Wie insbesondere anhand der Fig. 4 erkennbar ist, ist die Grundfläche der Abdeckklappe 8 derart geringer als eine freie Durchgriffsfläche der Durchgriffsöffnung 9, dass zwischen den Aussenrändern der Abdeckklappe 8 und den korrespondierenden Innenrändern des Randgehäuses 7 ein gleichmäßiger Luftspalt S verbleibt. Die Abdeckklappe 8 ist mittels ihres einstückig angeformten Wellenabschnittes 11 derart schwenkbeweglich im Lagergehäuse 7 gelagert, dass die Abdeckklappe 8 gemäß Pfeilrichtung in Fig. 2 in beiden Richtungen durch die Durchgriffsöffnung 9 hindurch schwenkbeweglich ist. In der Funktionsposition der Laderaumabdeckung 4 gemäß Fig. 1 ist die Abdeckklappe 8 somit sowohl nach oben als auch nach unten auslenkbar.

Die Abdeckklappe 8 ist mit Rückstellmitteln 12, 15 bis 17 versehen, um die Abdeckklappe 8 in ihrer unbetätigten Ruhelage in einem Nulllagenbereich, vorzugweise in einer Nulllagenposition, zu zentrieren, die die Durchgriffsöffnung 9 bis auf den verbleibenden Luftspalt S verdeckt. Die Nulllagenposition der Abdeckklappe 8 relativ zu dem Randgehäuse 7 und relativ zu dem Konturteil 6 ist in den Fig. 2, 3, 4 dargestellt.

Zur Lagerung der Abdeckklappe 8 weist ihr Wellenabschnitt 11 auf gegenüberliegenden Stirnseiten jeweils einen Lagerzapfen 13 auf, der auf beiden Seiten des Randgehäuses 7 in entsprechenden Lagerflanschen 14 drehbeweglich aufgenommen ist. Das Randgehäuse 7 ist bei der Darstellung gemäß den Fig. 3 bis 5 aus zwei Hälften, nämlich einer unteren Gehäusehälfte 7a und einer oberen Gehäusehälfte 7b, aufgebaut. Die Lagerflansche 14 sind ebenfalls aus zwei Hälften zusammengesetzt, wobei die entprechenden Hälften an den jeweiligen Gehäusehälften 7a, 7b einstückig angeformt sind und die Lagerzapfen 13 oben und unten umgreifen. Um die Abdeckklappe 8 in ihrer Nulllagenposition zentriert zu halten, greift als Rückstellmittel an dem Wellenabschnitt 11 ein Federmittel 12 an. Wie anhand der Fig. 3, 5 und 6 erkennbar ist, ist das Federmittel als Schraubenzugfeder gestaltet, die an einem Stirnende an einem gehäuseseitigen Zapfen 15 befestigt ist. Mit ihrem gegenüberliegenden Stirnende ist die Schraubendruckfeder 12 mit einer gabelförmigen Verzweigung verbunden, die die Federkräfte in zwei relativ zur Schwenkachse 10 einander gegenüberliegende Angriffpunkte am Wellenabschnitt 11 aufteilt. Auf der entsprechend gegenüberliegenden Seite - relativ zur Schwenkachse 10 - ist zur Aufnahme eines jeweiligen Gabelschenkels 17 der Verzweigung jeweils eine Aussparung 16 vorgesehen, in die die Gabelschenkel 17 derart eingreifen, dass in jeder Drehrichtung der Abdeckklappe 8 eine Mitnahme der Verzweigung, d.h. der Gabelschenkel 17, erfolgt. Im montierten Zustand befindet sich die Schraubendruckfeder unter Vorspannung, so dass die Abdeckklappe 8 durch die Gabelschenkel 17 in der Nulllage gehalten wird. Denn bei eienr Auslenkung der Abdeckklappe 8 wird der Wellenabschnitt verdreht, wodurch auch die Gabelschenkel 17 ihre Lage verändern und diese Lageänderung auf die Schraubenzugfeder weiterleiten. Die Federkräfte üben dadurch entsprechend umgekehrt Torsionskräfte auf den Wellenabschnitt aus, so dass dieser in die Gleichgewichtslage zurückgedreht wird, sobald die Belastung auf die Abdeckklappe 8 wegfällt.

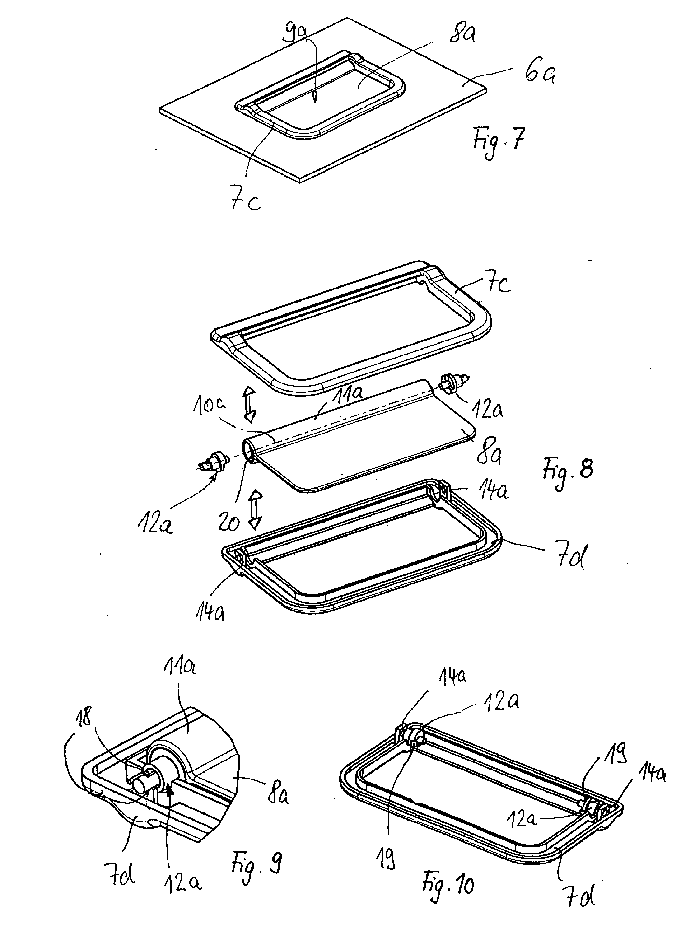

Bei der Ausführungsform nach den Fig. 7 bis 10 sind zu der Ausführungsform nach den Fig. 1 bis 6 funktionsgleiche Teile mit den gleichen Bezugszeichen, jedoch unter Hinzufügung des Buchstabens "a" versehen. Auch hier ist in einem formstabilen Konturteil 6a einer Laderaumabdeckung eine Durchgriffsöffnung 9a vorgesehen, die durch eine zu beiden Richtungen schwenkbewegliche Abdeckklappe 8a teilweise verschließbar ist. Die Abdeckklappe 8a entspricht bezüglich ihren Abmessungen der Abdeckklappe 8, so dass auch hier ein Luftspalt zwischen der Abdeckklappe 8a und dem die Durchgriffsöffnung 9a einfassenden Randgehäuse 7c, 7d verbleibt. Die hier beschriebene Ausführungsform entspricht der zuvor beschriebenen Ausführungsform, soweit im nachfolgenden nichts anderes beschrieben ist.

Wesentlicher Unterschied zu der zuvor beschriebenen Ausführungform ist es, dass als Rückstellmittel zur Zentrierung der Abdeckklappe 8a in eine Nulllage oder in einen Nulllagenbereich Federmittel in Form von Torsionsfederanordnungen 12a vorgesehen sind, die koaxial zu der Schwenkachse 10a auf gegenüberliegenden Stirnseiten des zylindrischen Wellenabschnittes 11a der Abdeckklappe 8a angeordnet sind. Die eine Torsionsfederanordnung 12a dient zur Rückstellung der Abdeckklappe 8a in die Nulllage aus der einen Auslenkrichtung und die andere Torsionsfederanordnung 12a zur Rückstellung der Abdeckklappe in die Nulllage aus der anderen Auslenkrichtung. Somit ist jeweils lediglich eine der beiden Torsionsfederanordnungen 12a in Aktion.

Wie insbesondere anhand der Explosionsdarstellung gemäß Fig. 8 erkennbar ist, ist der zylindrische Wellenabschnitt 11a zumindest an seinen gegenüberliegenden Stirnbereichen hohlzylindrisch ausgeführt. In diese hohlzylindrischen Bereiche sind korrespondierende zylindrische Abschnitte der jeweiligen Torsionsfederanordnung 12a gemäß Fig. 9 einsetzbar. In Fig. 8 ist auch erkennbar, dass an der Innenwandung des hohlzylindrischen Stirnbereiches auf gegenüberliegenden Seiten des Wellenabschnittes 11 jeweils ein Anschlag 20 vorgesehen ist, der als Mitnehmer für den drehbeweglichen Abschnitt der Torsionsfederanordnung 12a dient. Ein stationärer zylindrischer Bereich der Torsionsfederanordnung 12a, der in montierter Position axial nach außen ragt, ist in jeweils einem Lagerflansch 14a der unteren Gehäuseschale 7d des Randgehäuses 7c, 7d positioniert. Diesem zylindrischen Bereich sind Verdrehsicherungen 18 zugeorndet, die in korrespondierende Nutabschnitte des jeweiligen Lagerflansches 14a eingreifen und so die drehgesicherte Position des schmalen zylindrischen Bereiches jeder Torsionsfederanordnung 12a aufrechterhalten. Die gegenüberliegende Torsionsfederanordnung 12a ist entsprechend umgekehrt positioniert und beaufschlagt, wobei in der Nulllage der Abdeckklappe 8a beide Torsionsfederanordnungen 12a vorgespannt sind, so dass sich hier ein Gleichgewicht einstellt. Wie anhand der Fig. 10 erkennbar ist, ist der in die hohlzylindrischen Stirnabschnitte des Wellenabschnittes 11a einpassbare zylindrische Bereich jeder Torsionsfederanordnung 12a mit einer etwa viertelkreisförmigen Aussparung 19 versehen, die mit dem Anschlag 20 in der beschriebenen Weise zusammenwirkt, so dass die jeweilige Torsionsfederanordnung 12a bei einer Auslenkung der Abdeckklappe 8a in die Richtung, in der die Torsionsfederanordnung 12a nicht vorgespannt wird, frei läuft. Die eine Torsionsfederanordnung 12a ist somit in der einen Schwenkrichtung und die andere Torsionsfederanordnung 12a in der anderen Schwenkrichtung der Abdeckklappe 8a wirksam. In der Nulllage der Abdeckklappe 8a weisen beide Torsionsfederanordnungen 12a gleiche, entgegengesetzte Vorspannungsfederkräfte auf, so dass die Abdeckklappe 8a in dieser Nulllage zentriert im Gleichgewicht gehalten wird, solange keine manuelle Belastung auf die Abdeckklappe 8a ausgeübt wird.

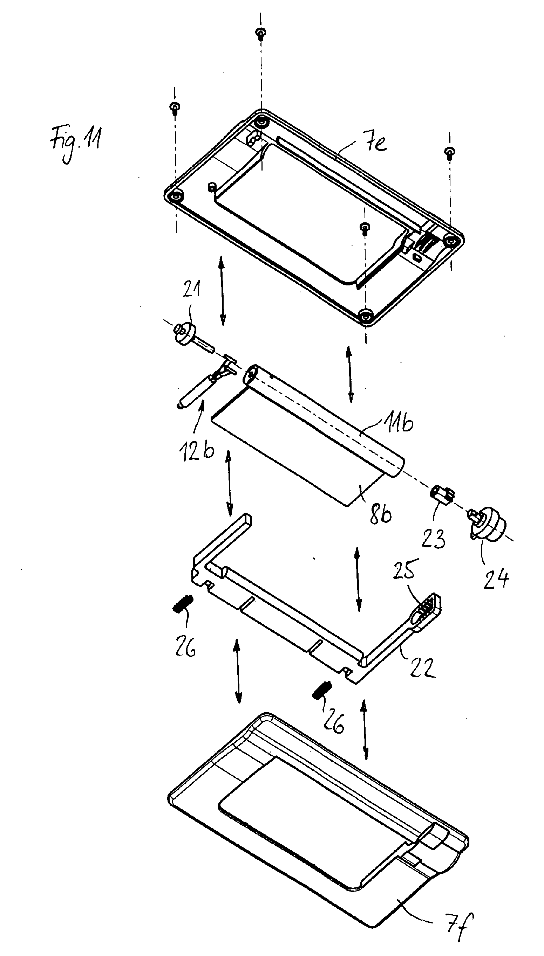

Eine Abdeckklappe 8b gemäß den Fig. 11 bis 14 entspricht bis auf die nachfolgend beschriebenen Unterschiede von Aufbau und Funktion her der zuvor ausführlich beschriebenen Ausführungsform nach den Fig. 1 bis 6. Funktionsgleiche Teile sind mit gleichen Bezugszeichen unter Hinzufügung des Buchstaben b versehen. Zur ergänzenden Erläuterung der Ausführungsform nach den Fig. 11 bis 14 wird daher hiermit ausdrücklich auf die Offenbarung der Ausführungsform nach den Fig. 1 bis 6 verwiesen.

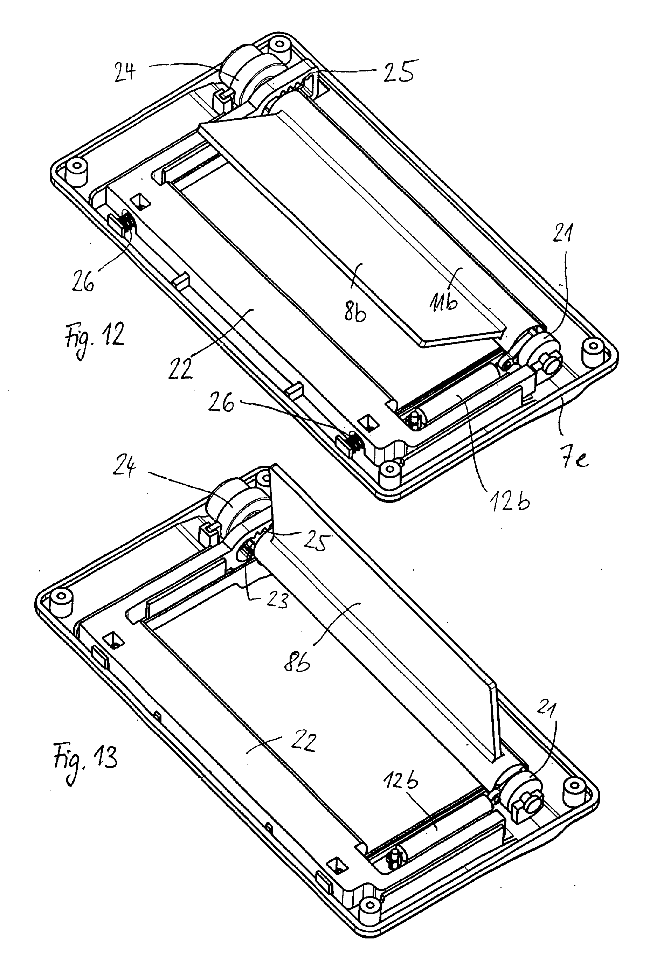

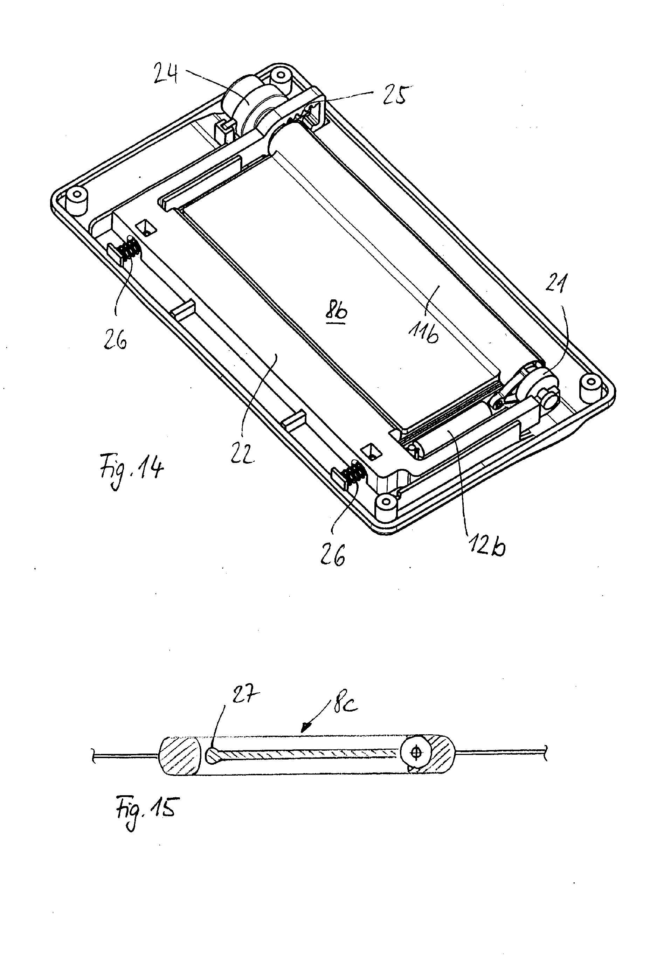

Der Abdeckklappe 8b nach den Fig. 11 bis 14 sind ergänzend Stellmittel zur zwangsläufigen Vergrößerung des Öffnungswinkels der Abdeckklappe 8b zugeordnet. Zudem ist ein Dämpfungsmittel vorgesehen, das eine Rückstellbewegung der Abdeckklappe 8b aus einer ausgelenkten Position gemäß Fig. 13 in einen Nulllagenbereich gemäß Fig. 14 zeitlich verzögert.

Das Federmittel 12b, dessen Aufbau dem Federmittel 12 der Ausführungsform nach den Fig. 1 bis 6 entspricht, ist durch eine Zapfensicherung 21 an dem Wellenabschnitt 11b der Abdeckklappe 8b gesichert. Dabei werden mittels der Zapfensicherung 21 insbesondere die beiden nicht näher bezeichneten Gabelschenkel des eine Schraubendruckfeder aufweisenden Federmittels 12b axial an dem Wellenabschnitt 11b fixiert.

Auf der der Zapfensicherung 21 und dem Federmittel 12b gegenüberliegenden Seite ist koaxial zum Wellenabschnitt 11b stirnseitig mit dem Wellenabschnitt 11b ein Übertragungsritzel 23 drehschlüssig verbunden. An das Übertragungsritzel 23, das lediglich über einen Teil seines Umfangs mit einer Außenverzahnung versehen ist, schließt koaxial ein Dämpfungsmittel 24 an, das als Torsionsdämpfer gestaltet ist. Das Übertragungsritzel 23 kämmt mit einer Zahnstange 25 eines Betätigungsbügels 22, der in den beiden Gehäuseschalen 7e, 7f der Umrahmung gemäß den Darstellungen nach den Fig. 12 bis 14 translatorisch und radial zur Schwenkachse der Abdeckklappe 8b beweglich gelagert ist. Um die translatorische Beweglichkeit des Betätigungsbügels 22 zu ermöglichen, sind entsprechende Führungsprofilierungen an den beiden Gehäuseschalen 7e, 7f ausgebildet. Der Betätigungsbügel 22 ist gegen die Federkraft von einer Federanordnung 26, vorliegend in Form von zwei Schraubendruckfedern, translatorisch beweglich. Eine translatorische Bewegung des Betätigungsbügels 22 wird mit Hilfe der Zahnstange 25 und des Übertragungsritzels 23 in eine rotatorische Bewegung der Abdeckklappe 8b umgesetzt. Die Zahnstange 25 ist augenartig ausgeführt und doppelt wirkend gestaltet, indem sie auf gegenüberliegenden Innenseiten des Auges jeweils eine Verzahnung aufweist. Je nach Ausschwenkrichtung der Abdeckklappe 8b kämmt die Außenverzahnung des Übertragungsritzels 23 somit mit der oberen oder mit der unteren Verzahnung der Zahnstange 25.

Wie anhand der Fig. 12 und 14 erkennbar ist, ragt ein Griffbereich des Betätigungshebels 22 über den Innenrand der Gehäuseschalen 7e, 7f im Nulllagenbereich der Abdeckklappe 8b in die Durchgriffsöffnung hinein. Die Abdeckklappe 8b weist dementsprechend eine geringere Erstreckung in radialer Richtung zu ihrer Schwenkachse, d.h. eine geringere Tiefe auf als bei den Ausführungsformen nach den Fig. 1 bis 10. Zwischen dem Außenrand der Abdeckklappe 8b und dem Griffbereich des Betätigungshebels 22 verbleibt ein Spalt auch im Nulllagenbereich der Abdeckklappe 8b, so dass der Betätigungshebel 22, der teilweise in die Durchgriffsöffnung hineinragt, die Durchschwenkbewegung der Abdeckklappe 8b nicht behindert. Da der Betätigungshebel 22 mit seinem Griffbereich in die Durchgriffsöffnung hineinragt, kommt eine Bedienhand beim Eingreifen in die Durchgriffsöffnung mit dem Griffbereich in Berührung. Sobald die Bedienhand fest zugreift und das Flächengebilde zu sich heranzieht - sei es, um das Flächengebilde in der Schutzposition einzuhängen, oder um das Flächengebilde aus den fahrzeugfesten Halterungen auszuhängen- , übt die Bedienhand auf den Griffbereich und damit auf den Betätigungshebel 22 eine Druckkraft entgegen der Federkraft der Federanordnung 26 aus, wodurch der Betätigungshebel 22 translatorisch aus der Durchgriffsöffnung heraus in die Umrahmung hinein verschoben wird. Hierdurch wird zwangsläufig auch die Zahnstange 25 verschoben, wodurch das mit dieser kämmende Übertragungsritzel verdreht wird. Hierdurch wird die Abdeckklappe 8b weiter nach außen ausgelenkt, vorzugsweise bis zu einem Öffnungswinkel von 90° (Fig. 13). Selbstverständlich sind die durch die Zahnstange 25 und das Übertragungsritzel 23 gebildeten Übertragungsmittel so ausgelegt, dass eine entsprechende translatorische Bewegung des Betätigungshebels 22 aus der Durchgriffsöffnung heraus in jedem Fall ein Nachaußenschwenken der Abdeckplatte 8b bewirkt, unabhängig davon, ob die Abdeckklappe nach oben oder nach unten ausgelenkt ist.

Bei der anhand der Fig. 12 bis 14 dargestellten Ausführungsform ist in Fig. 12 die Position dargestellt, in der die Bedienhand von unten her in die Durchgriffsöffnung eingreift und die Abdeckklappe 8b um einen bestimmten Winkel, typischerweise etwa 30°, nach oben auslenkt. Durch Umgreifen des Randes der Durchgriffsöffnung wird zwangsläufig der Griffbereich druckbeaufschlagt, so dass der Betätigungsbügel 22 sich entgegen der Rückstellkraft der Federanordnung 26 von der Abdeckklappe 8b weg nach außen bewegt (Fig. 13). Dabei wird auf die Zahnstange 25 eine relativ zur Schwenkachse radiale Linearbewegung ausgeübt, die mittels des kämmenden Übertragungsritzels 23 in eine Schwenkbewegung der Abdeckklappe 8b nach oben umgesetzt wird (Fig. 13). In Fig. 13 befindet sich die Abdeckklappe 8b in ihrer maximalen Auslenkposition, die bei der vorliegenden Ausführungsform 90° beträgt. Sobald nun die Belastung auf den Betätigungshebel 22, d.h. auf dessen Griffbereich, weggenommen wird, drücken die Schraubendruckfedern der Federanordnung 26 den Betätigungshebel 22 wieder in Richtung der Abdeckklappe 8b, wodurch auch die Abdeckklappe 8b mit Hilfe des durch die Zahnstange 25 und das Übertragungsritzel 23 gebildeten Zahnstangentriebs wieder in den Nulllagenbereich zurückgedreht wird. Diese Rückdrehung der Abdeckklappe 8b erfolgt zeitverzögert, da jetzt der Torsionsdämpfer 24 wirksam wird. Wie anhand der Fig. 12 bis 14 erkennbar ist, ist der Torsionsdämpfer 24 mittels eines Stütznockens mit einem Teil gehäusefest in der Umrahmung gehalten. Der andere Teil ist drehfest mit dem Wellenabschnitt 11b verbunden. Vorzugsweise ist der Torsionsdämpfer als Silikondämpfer ausgeführt. Der Torsionsdämpfer stellt eine Bremse für die Rückschwenkbewegung der Abdeckklappe 8b in den Nulllagenbereich dar.

Bei der Ausführungsform einer Abdeckklappe 18c gemäß Fig. 15 entsprechen alle Teile der in Fig. 2 dargestellten Ausführungsform, so dass für eine nähere Erläuterung auf die Beschreibung zu dieser Ausführungsform verwiesen wird. Einziger Unterschied bei der Abdeckklappe 8c ist es, dass die Abdeckklappe 8c wenigstens im Bereich ihrer längsseitigen Randkante mit einem Kantenschutz 27 versehen ist. Bei der in Fig. 15 dargestellten Ausführungsform ist der Kantenschutz durch eine einstückige Profilverdickung und Abrundung der entsprechenden Längskante der Abdeckklappe 8c realisiert. Alternativ ist es auch möglich, die entsprechende Längskante der Abdeckklappe lediglich anzufasen oder abzurunden. Schließlich ist es auch möglich, als Kantenschutz ein separates, abgerundetes Profilelement auf die Längskante aufzusetzen und fest mit der Abdeckklappe zu verbinden.

## Patentansprüche

1. Flächengebilde, insbesondere Laderaumabdeckung für ein Kraftfahrzeug, mit einer Durchgriffsöffnung, die durch ein bewegliches Abdeckelement zumindest teilweise verschließbar ist, **dadurch gekennzeichnet, dass** das Abdeckelement (8, 8a, 8b) eine kleinere Grundfläche aufweist als eine freie Durchgriffsfläche der Durchgriffsöffnung (9, 9a), und dass das Abdeckelement als frei durch die Durchgriffsöffnung (9, 9a) hindurchschwenkbare, zu beiden Seiten der Durchgriffsöffnung (9, 9a) hin auslenkbare Abdeckklappe (8, 8a, 8b) gestaltet ist.

2. Flächengebilde nach Anspruch 1, **dadurch gekennzeichnet, dass** der Abdeckklappe (8, 8a, 8b) Rückstellmittel (12, 12a, 12b) zugeordnet sind, die die Abdeckklappe unbetätigt in einem etwa in der Ebene der Durchgriffsöffnung (9, 9a) befindlichen Nulllagenbereich ausrichten.

3. Flächengebilde nach Anspruch 2, **dadurch gekennzeichnet, dass** Rückstellmittel (12, 12a, 12b) für beide Schwenkrichtungen vorgesehen sind.

4. Flächengebilde nach Anspruch 2 oder 3, **dadurch gekennzeichnet, dass** als Rückstellmittel Federmittel (12, 12a, 12b) vorgesehen sind, die alternativ oder kumulativ in beiden Schwenkrichtungen der Abdeckklappe (8, 8a, 8b) - aus der Ruheposition heraus - Rückstellkräfte auf die Abdeckklappe (8, 8a, 8b) in Richtung des Nulllagenbereiches ausüben.

5. Flächengebilde nach Anspruch 4, **dadurch gekennzeichnet, dass** die Federmittel in einem Schwenkachsbereich der Abdeckklappe (8, 8a, 8b) angreifen.

6. Flächengebilde nach Anspruch 5, **dadurch gekennzeichnet, dass** die Federmittel Torsionsfedern aufweisen.

7. Flächengebilde nach Anspruch 4, **dadurch gekennzeichnet, dass** die Federmittel (12, 12b) Biege- oder Schraubenfedern aufweisen.

8. Flächengebilde nach Anspruch 4, **dadurch gekennzeichnet, dass** die Federmittel (12, 12a, 12b) beider Schwenkrichtungen im Nulllagenbereich der Abdeckklappe (8, 8a, 8b) vorgespannt sind, und dass die Federmittel (12, 12a, 12b) derart ausgelegt sind, dass sich ihre Federkräfte im Nulllagenbereich der Abdeckklappe (8, 8a, 8b) gegeneinander aufheben.

9. Flächengebilde nach dem Oberbegriff des Anspruchs 1 oder nach Anspruch 1, **dadurch gekennzeichnet, dass** der Abdeckklappe (8b) manuell betätigbare Stellmittel (22, 23, 25) zur Vergrößerung des Öffnungswinkels der Abdeckklappe (8b) relativ zu der Durchgriffsöffnung bewegungsübertragend zugeordnet sind.

10. Flächengebilde nach Anspruch 9, **dadurch gekennzeichnet, dass** die Stellmittel (22, 23, 25) Sperrmittel aufweisen, die während einer Betätigung der Stellmittel die Abdeckklappe (8b) in der geöffneten Position blockiert halten.

11. Flächengebilde nach Anspruch 9, **dadurch gekennzeichnet, dass** der Abdeckklappe (8b) Dämpfungsmittel (24) zugeordnet sind, die eine Rückstellbewegung der Abdeckklappe (8b) aus einer Auslenkposition in den Nulllagenbereich verzögern.
